# EUROPEAN PATENT SPECIFICATION

(11) **EP 1 625 291 B1**
(45) Date of publication and mention of the grant of the patent: **18.03.2009**
(21) Application number: 04732863.8
(22) Date of filing: 13.05.2004
(51) Int. Cl.: F02B 37/00, F01D 5/14, F04D 29/30

(54) **TURBO COMPRESSOR SYSTEM FOR AN INTERNAL COMBUSTION ENGINE COMPRISING A COMPRESSOR OF RADIAL TYPE AND PROVIDES WITH AN IMPELLER WITH BACKSWEPT BLADES**
TURBOVERDICHTERSYSTEM FÜR EINE BRENNKRAFTMASCHINE MIT EINEM RADIALVERDICHTER, DER MIT EINEM LAUFRAD MIT GEPFEILTEN SCHAUFELN VERSEHEN IST
SYSTEME DE TURBOCOMPRESSEUR POUR MOTEUR A COMBUSTION INTERNE

(30) Priority: 15.05.2003 SE 0301412; 11.05.2004 WO PCT/SE2004/000715
(43) Date of publication of application: 15.02.2006
(73) Proprietor: VOLVO LASTVAGNAR AB, 405 08 Göteborg (SE)
(72) Inventor: SUNDIN, Lars, S-212 32 Malmö (SE); ISING, Magnus, S-222 25 Lund (SE); KRAUSCHE, Sebastian, S-236 36 Höllviken (SE); ANDERSSON, Per, S-215 79 Malmö (SE)
(74) Representative: Fröhling, Werner Otto
(86) International application number: PCT/SE2004/000740
(87) International publication number: WO 2004/101969

(56) References cited:
- FR-A1- 2 282 058
- GB-A- 1 438 172
- US-A- 2 759 662

## Description

### TECHNICAL FIELD

The present invention relates to a turbocharger unit for an internal combustion engine with at least one exhaust line for conducting exhaust gases away from the combustion chamber of the engine and at least one inlet line for supplying air to said combustion chamber, comprising a turbine which interacts with a compressor for extracting energy from the exhaust gas flow of the engine and pressurizing the inlet air of the engine.

### BACKGROUND

Current technology relating to turbocharger systems for supercharging internal combustion engines of diesel type, in particular for heavy-duty vehicles, usually comprises a single-stage compressor which is driven by a single-stage turbine, both of radial type.

GB-A-1 438 172 discloses a two-stage turbine compressor supercharger according to the first past of claim 1. Superchargers suitable for a diesel engine with a stroke volume of 6 to 20 liters normally have an efficiency, under stationary conditions, of between 50% and 60% (?compressor * ?mechanical * ?turbine). In current diesel engines, the benefit of good efficiency is lower than it will be for future engines which will require higher charging pressure. Examples of systems which increase the requirement for supercharging are exhaust gas recirculation for lower emissions of nitrogen oxide or systems with variable control of inlet valves.

Turbocharger systems with an efficiency higher than 60%, under stationary conditions, afford an increased possibility of meeting future requirements for environment-friendly and economical engines. Previously, environmental requirements for diesel engines have usually led to impaired efficiency, which has consequently meant that the energy resource of the fuel has been more poorly utilized.

Modern impellers are usually provided with backswept blades where the blade angle β*_{b2}* between an imaginary extension of the center line of the blade between root section and tip section in the direction of the outlet tangent and a line which connects the center axis of the impeller to the outer tip of the blade lies below 35°.

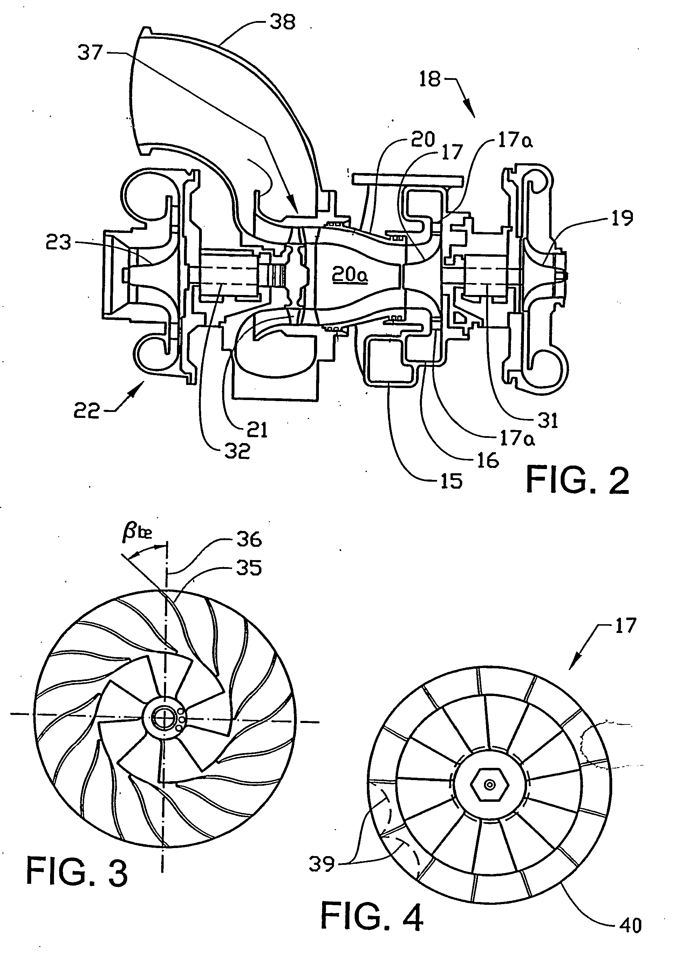

Radial turbines used in turbochargers are often provided with scallop cutouts between the turbine blades (see Figure 4) for reducing the mass of the turbine wheel, which results in improved transient response, that is to say increases the capacity of the turbine wheel for reacting to an increased exhaust gas flow. This makes it possible for an engine to increase speed more rapidly by virtue of the scallop cutouts reducing the polar moment of inertia because they eliminate material at the periphery of the turbine wheel. However, the scallop cutouts have a negative effect on the efficiency of the turbine owing to flow leakage from the pressure side to the suction side at the outer ends of the turbine blades. Another reason for providing the turbine with scallop cutouts is to reduce stresses owing to uneven temperature during starting, stopping and load changes. Problems of uneven temperature distribution are greater in wheels of large diameter.

A disadvantage of increasing the blade angle β*_{b2}* of the compressor is that the peripheral speed and thus stresses in the impeller increase for the same pressure ratio. This means that materials with greater strength properties may be required. For example, the current cast aluminum impellers and wheels may be replaced by considerably more expensive forged and machined aluminum or titanium components.

### SUMMARY OF THE INVENTION

It is therefore an object of the invention to produce a turbocharger unit with good characteristics in terms of both transient response and efficiency.

A turbocharger unit designed for this purpose according to the invention for an internal combustion engine with at least one exhaust line for conducting exhaust gases away from the combustion chamber of the engine and at least one inlet line for supplying air to said combustion chamber comprises a turbine which interacts with a compressor for extracting energy from the exhaust gas flow of the engine and pressurizing the inlet air of the engine and is characterized in that the compressor is of radial type and provided with an impeller with backswept blades where the blade angle β*_{b2}* between an imaginary extension of the center line of the blade between root section and tip section in the direction of the outlet tangent and a line which connects the center axis of the impeller to the outer tip of the blade is at least roughly 45°, and in that the turbine which drives the compressor is of radial type. By virtue of this design of the turbocharger unit, the efficiency can be kept high at the same time as the transient response is improved.

Increasing the blade angle β*_{b2}* of the compressor results in the pressure increase for a given rotational speed decreasing. In order to compensate for this, a higher speed or larger impeller diameter is required. An unexpected effect, however, is that optimum rotational speed for the compressor construction increases more than is required in order to maintain the pressure increase and the diameter can therefore even be reduced.

This can be seen from Diagrams 1 and 2, where Diagram 1 shows the work factor Δ*hₒlU²* of the impeller as a function of the blade angle β*_{b2}*, where Δ*hₒ* is the enthalpy increase and *U* is the peripheral speed of the impeller. An increase in the blade angle β*_{b2}* from, for example, 45° to 55° means that the work factor decreases by roughly 5%. In order to maintain the pressure ratio, the peripheral speed *U* must then be increased by roughly 2.5% (v1.05=1.025), assuming unchanged efficiency.

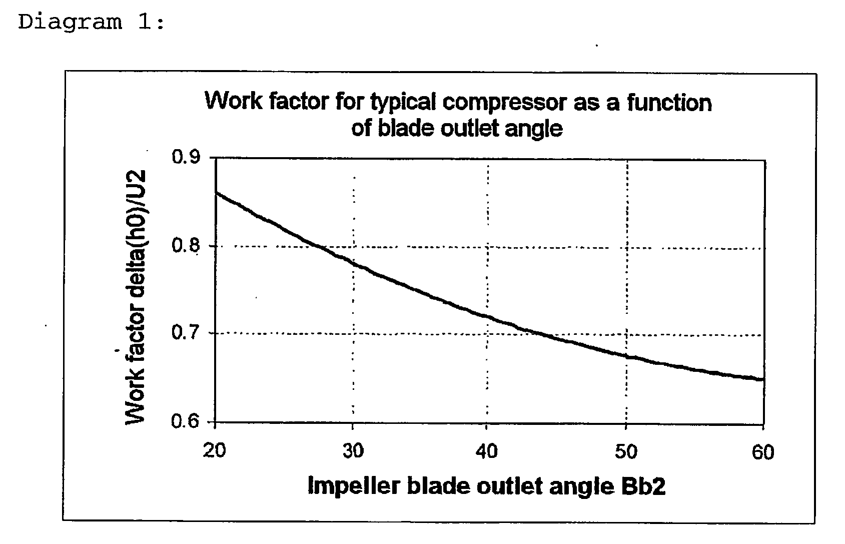

Optimum rotational speed can be read off from Diagram 2 which shows efficiency as a function of specific rotational speed *Ns* and blade angle β*_{b2}*. Specific rotational speed *Ns* is defined here as *Ns=*ω●√*V*/*(H_{ad})*^{*3*/*4*} where ω = angular speed, *V* = inlet volume flow, *H_{ad}* = adiabatic enthalpy increase (=*Cₚ*•*T_{0,in}*• *((Pressure ratio)*^{*((k-1)*/}*^{k)} -1)).* It can be seen from Diagram 2 that optimum *Ns* and thus rotational speed, at unchanged volume flow, pressure ratio and inlet conditions, increases by roughly 4% when the blade angle β*_{b2}* is increased from 45° to 55°.

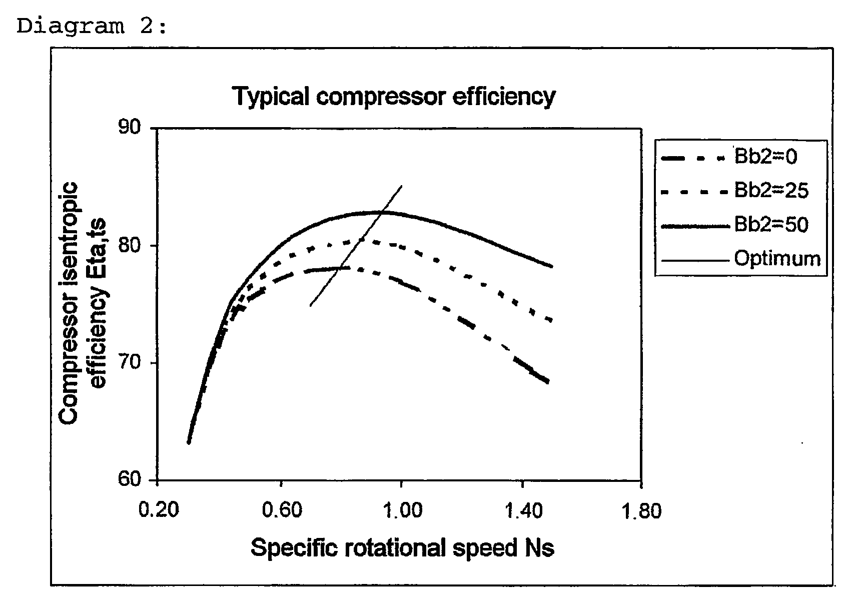

The radial turbine which is to drive the compressor can be reduced in diameter at least corresponding to the higher rotational speed of the compressor, which results in a lower polar moment of inertia. An alternative improvement possibility is for the scallop cutouts to be reduced or dispensed with. This means that the efficiency is increased, which itself means that an even smaller diameter can be used.

Advantageous illustrative embodiments of the invention emerge from the following dependent patent claims.

Using the turbocharger described in a two-stage turbo system has the advantage that each turbocharger works with a smaller pressure increase and thus a lower rotational speed. In such cases, current materials can be used in spite of the large backsweep angle (β*_{b2}*)

### BRIEF DESCRIPTION OF FIGURES

The invention will be described in greater detail below with reference to illustrative embodiments shown in the accompanying drawings, in which
- FIG 1: shows diagrammatically an internal combustion engine with a two-stage turbocharger system;
- FIG 2: is a longitudinal section through the two turbocharger stages included in the turbocharger system;
- FIG 3: shows a partly broken plan view of an impeller which is used in the turbocharger unit according to the invention, and
- FIG 4: shows a plan view of the turbine wheel of the high-pressure turbine.

### DESCRIPTION OF ILLUSTRATIVE EMBODIMENTS

The invention is described as applied in a two-stage supercharging system for primarily diesel engines with a stroke volume of between 6 and roughly 20 liters, for use preferably on heavy-duty vehicles such as trucks, buses and construction machinery. A characteristic of the supercharging system is that it provides considerably more effective supercharging compared with current systems. The supercharging takes place in two stages with two series-connected compressors of radial type with intermediate cooling. The first compressor stage, referred to as the low-pressure compressor, is driven by a low-pressure turbine of axial type. The second compressor stage, the high-pressure compressor, is driven by a high-pressure turbine of radial type.

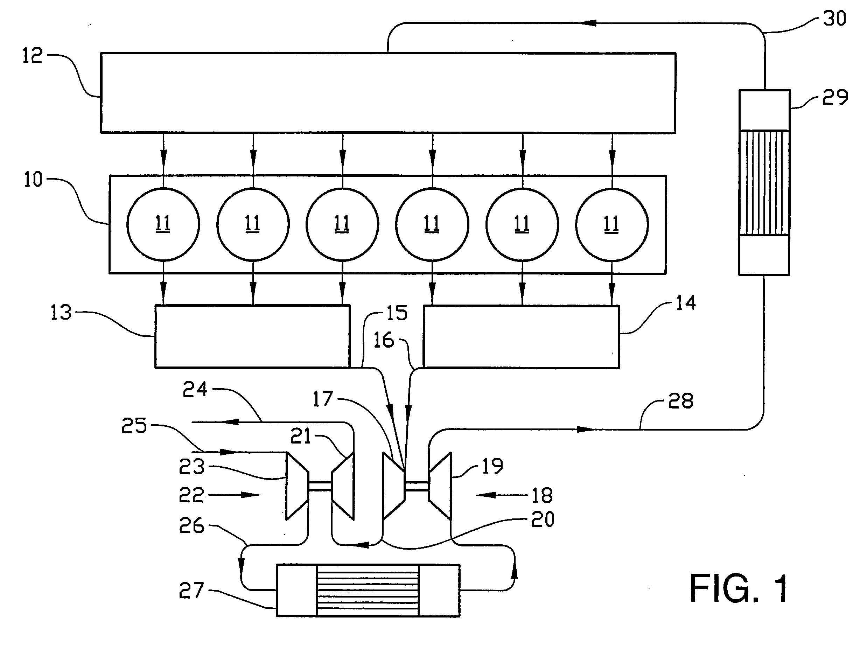

Fig. 1 shows an engine block 10 with six engine cylinders 11 which in a conventional way comminicate with an inlet manifold 12 and two separate exhaust manifolds 13, 14. Each of these two exhaust manifolds receives exhaust gases from three of the engine cylinders. The exhaust gases are conducted via separate pipelines 15, 16 to a turbine 17 in a high-pressure turbo unit 18, which comprises a compressor 19 mounted on a common shaft with the turbine 17.

The exhaust gases are conducted onward via a pipeline 20 to a turbine 21 in a low-pressure turbo unit 22, which comprises a compressor 23 mounted on a common shaft with the turbine 21. The exhaust gases are finally conducted onward via a pipeline 24 to the exhaust system of the engine, which can comprise units for aftertreatment of exhaust gases.

Filtered inlet air is admitted to the engine via the pipeline 25 and is conducted to the compressor 23 of the low-pressure turbo unit 22. A pipeline 26 conducts the inlet air onward via a first charge air cooler 27 to the compressor 19 of the high-pressure turbo unit 18. After this charging in two stages with intermediate cooling, the inlet air is conducted onward via the pipeline 28 to a second charge air cooler 29, after which the inlet air reaches the inlet manifold 12 via the pipeline 30.

The turbocharger system is shown in greater detail in Fig. 2 which illustrates the double, spiral inlets 15, 16 to the high-pressure turbine 17, which each provide half the turbine with gas flow via inlet guide vanes 17a. The high-pressure turbine 17 is of radial type and is connected to the low-pressure turbine 21 via the intermediate duct 20.

The high-pressure turbine 17 is mounted together with the high-pressure compressor 19 on the shaft 31. The low-pressure turbine 21 is in a corresponding way mounted together with the low-pressure compressor 23 on the shaft 32.

The high-pressure turbo is designed according to the invention described and consists of a high-pressure compressor with blades which are designed with a large backsweep, which will be described below with reference to Fig. 3.

It can be seen from Fig. 3 that a blade angle β*_{b2}* between an imaginary extension of the blade 35 along the center line between root section and tip section in the direction of the outlet tangent and a (dot-dash) line 36 which connects the center axis of the impeller to the outer tip of the blade is at least roughly 45°, suitably at least roughly 50-55°. Turbocompressors available on the market have blade angles β*_{b2}* of between roughly 25 and roughly 35°. Testing a turbocharger system according to the invention has shown it to be advantageous to increase the blade angle to at least roughly 45°. The effect of this increase in the blade angle consists primarily in that the impeller with associated turbine rotates at a higher rotational speed for a given pressure ratio. The increase in the speed means that the diameter and thus also the mass inertia of the turbine wheel can be reduced. As a secondary effect of this, the transient response of the engine is also improved as the reduced mass inertia means that the turbine wheel can accelerate more easily to its effective speed range. The compressor efficiency also increases, inter alia as a consequence of a reduced speed difference between the flow along the pressure side and suction side of the blade, which leads to a smaller secondary flow and thus lower losses, and also owing to the flow rate in the rotor outlet being reduced, which leads to lower losses in the diffuser which follows.

Both the compressors are provided with guide vanes downstream of the respective impeller in order to optimize the pressure build-up. This diffuser is advantageously of LSA (Low Solidity Airfoil) type, which means a diffuser with aerodynamically designed blades, the length of which has a ratio to the spacing between the blades (pitch), in the circumferential direction in the inlet, which lies in the range 0.75-1.5. A characteristic of this diffuser type is that it does not limit the possible working range (combination of pressure ratio and volume flow) of the compressor as much as a conventional diffuser with long blades.

An outlet diffuser 37 is located after the low-pressure turbine 21 in order to recover dynamic pressure from the turbine. The diffuser runs into an exhaust collector 38 which guides the exhaust gases out to the exhaust pipe 24.

The high-pressure turbine 17 shown in Fig. 4 which drives the high-pressure compressor 19 is of radial type with a turbine wheel which, for rotation at relatively high rotational speeds, is made with a small diameter. This makes it possible to avoid cutouts 39 in the turbine wheel hub 40 of the kind which are normally used according to the state of the art in this type of turbine (what is known as scalloping). These cutouts 39 are shown by dashed lines in Fig. 4, simply to illustrate the state of the art. Owing to the fact that these cutouts are not required, the turbine wheel can work more effectively for a higher overall efficiency.

The invention is not to be regarded as being limited to the illustrative embodiments described above, but a number of further variants and modifications are conceivable within the scope of the following patent claims. For example, the turbocharger unit according to the invention is described in connection with a six-cylinder diesel engine with two-stage turbocharging, but the invention can be applied to all different piston engines from one cylinder upward and which are driven in two-stroke or four-stroke operation. The invention can also be applied to marine engines and engines with stroke volumes other than those mentioned above. The high-pressure turbine 17 can have no inlet guide vanes or alternatively be provided with fixed or geometrically rotatable inlet guide vanes 17a.

## Claims

1. A turbocharger unit (18) for an internal combustion engine (10) with at least one exhaust line (15, 16) for conducting exhaust gases away from the combustion chamber (11) of the engine and at least one inlet line (12) for supplying air to said combustion chamber, comprising a turbine (17) of radial type which interacts with a compressor (19) of radial type for extracting energy from the exhaust gas flow of the engine and pressurizing the inlet air of the engine, **characterized in that** the compressor (19) is provided with an impeller with backswept blades (35) where the blade angle (β*_{b2}*) between an imaginary extension of the center line of the blade between root section and tip section in the direction of the outlet tangent and a line (36) which connects the center axis of the impeller to the outer tip of the blade is at least roughly 45°.

2. The turbocharger system as claimed in claim 1, **characterized in that** the blade angle (β*_{b2}*) is at least roughly 55°.

3. The turbocharger system as claimed in claims 1 to 2, **characterized in that** the compressor is provided with a diffuser of LSA (Low Solidity Airfoil) type.

4. The turbocharger system as claimed in any one of claims 1 to 3, **characterized in that** the radial turbine is made with a hub without cutouts.

5. The turbocharger system as claimed in any one of claims 1 to 3, **characterized in that** the radial turbine is made with a hub with cutouts which have a maximum radial depth corresponding to 5% of the wheel diameter.

6. The turbocharger system as claimed in any one of claims 1 to 5, **characterized in that** the turbocharger is intended for a turbo system with two-stage charging where compressors and turbines are arranged in series.

## Patentansprüche

1. Turboladereinheit (18) für einen Verbrennungsmotor (10) mit wenigstens einer Abgasleitung (15, 16) für eine Abführung von Abgasen aus der Verbrennungskammer (11) des Motors und wenigstens einer Einlassleitung (12) für eine Zufuhr von Luft in die Verbrennungskammer, die einer Turbine (17) vom Radialtyp umfasst, die mit einem Kompressor (19) vom Radialtyp zusammenwirkt, um Energie aus der Abgasströmung des Motors abzuziehen und die Einlassluft des Motors unter Druck zu setzen, **dadurch gekennzeichnet, dass** der Kompressor (19) mit einem Laufrad mit sich nach hinten verjüngenden Schaufeln (35) versehen ist, wobei der Schaufelwinkel (β_{b2}) zwischen einer imaginären Verlängerung der Mittellinie der Schaufel zwischen Fußabschnitt und Spitzenabschnitt in Richtung der Auslasstangente und einer Geraden (36), die die Mittelachse des Laufrads mit der äußeren Spitze der Schaufel verbindet, wenigstens ungefähr 45° beträgt.

2. Turboladersystem nach Anspruch 1, **dadurch gekennzeichnet, dass** der Schaufelwinkel (β_{b2}) wenigstens ungefähr 55° beträgt.

3. Turboladersystem nach Anspruch 1 bis 2, **dadurch gekennzeichnet, dass** der Kompressor mit einem Diffusor vom Typ LSA (Tragflügel mit geringer Festigkeit) versehen ist.

4. Turboladersystem nach einem der Ansprüche 1 bis 3, **dadurch gekennzeichnet, dass** die Radialturbine mit einer Nabe ohne Aussparungen ausgeführt ist.

5. Turboladersystem nach einem der Ansprüche 1 bis 3, **dadurch gekennzeichnet, dass** die Radialturbine mit einer Nabe mit Aussparungen ausgeführt ist, die eine maximale Radialtiefe aufweisen, die bis 5% des Raddurchmessers entspricht.

6. Turboladersystem nach einem der Ansprüche 1 bis 5, **dadurch gekennzeichnet, dass** der Turbolader für ein Turbosystem mit zweistufiger Aufladung bestimmt ist, wobei die Kompressoren und Turbinen in Reihe angeordnet sind.

## Revendications

1. Unité de turbocompresseur (18) destinée à un moteur à combustion interne (10) ayant au moins une ligne d'échappement (15, 16) pour conduire des gaz d'échappement loin de la chambre de combustion (11) du moteur, et au moins une ligne d'entrée (12) pour alimenter de l'air vers ladite chambre de combustion, comportant une turbine (17) du type radial qui interagit avec un compresseur (19) du type radial pour extraire de l'énergie à partir du flux de gaz d'échappement du moteur, et mettre sous pression l'entrée d'air du moteur, **caractérisée en ce que** le compresseur (19) est muni d'une hélice ayant des pales à balayage arrière (35), où l'angle de pale (β*_{b2}*) entre un prolongement imaginaire de l'axe central de la pale entre le tronçon de racine et le tronçon de pointe dans la direction de la tangente à la sortie et une ligne (36) qui relie l'axe central de l'hélice à la pointe extérieure de la pale est au moins grossièrement de 45°.

2. Système de turbocompresseur selon la revendication 1, **caractérisé en ce que** l'angle de pale (β*_{b2}*) est au moins grossièrement de 55°.

3. Système de turbocompresseur selon la revendication 1 ou 2, **caractérisé en ce que** le compresseur est muni d'un diffuseur du type LSA (Voilure à Faible Solidité).

4. Système de turbocompresseur selon l'une quelconque des revendications 1 à 3, **caractérisé en ce que** la turbine radiale est munie d'un moyeu sans entailles.

5. Système de turbocompresseur selon l'une quelconque des revendications 1 à 3, **caractérisé en ce que** la turbine radiale est munie d'un moyeu ayant des entailles qui ont une profondeur radiale maximum correspondant à 5 % du diamètre de roue.

6. Système de turbocompresseur selon l'une quelconque des revendications 1 à 5, **caractérisé en ce que** le turbocompresseur est prévu pour un système avec charge en deux étapes, où des compresseurs et des turbines sont agencés en série.
